(19) Europäisches Patentamt
European Patent Office
Office européen des brevets

(11) EP 4 002 188 A1

(12) **EUROPEAN PATENT APPLICATION**
published in accordance with Art. 153(4) EPC

(43) Date of publication:
**25.05.2022 Bulletin 2022/21**

(21) Application number: **20934896.0**

(22) Date of filing: **29.09.2020**

(51) International Patent Classification (IPC):
***G06F 30/15** (2020.01)* ***G06F 119/10** (2020.01)*
***G06F 111/04** (2020.01)*

(52) Cooperative Patent Classification (CPC):
Y02T 90/00

(86) International application number:
**PCT/CN2020/118669**

(87) International publication number:
**WO 2022/061944 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2020 CN 202011028783**

(71) Applicant: **CRRC Changchun Railway Vehicles Co., Ltd.**
**Changchun, Jilin 130000 (CN)**

(72) Inventors:
- **WANG, Jintian**
  **Changchun, Jilin 130000 (CN)**
- **WU, Jian**
  **Changchun, Jilin 130000 (CN)**
- **GAO, Yang**
  **Changchun, Jilin 130000 (CN)**
- **SUN, Qiang**
  **Changchun, Jilin 130000 (CN)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

# (54) VEHICLE INTERIOR LOW NOISE OPTIMIZATION DESIGN METHOD, AND SYSTEM

(57) A method and a system for optimizing and designing low in-vehicle noise are provided. Sound transmission losses $TL_i$ of different regions of a to-be-designed vehicle and sound powers $L_{wj}$ of sound source devices are inputted to an in-vehicle noise simulation-prediction-analysis model; noise prediction are performed based on the in-vehicle noise simulation-prediction-analysis model iteratively with starting with initial sound transmission losses and initial sound powers under a constraint on a total cost for in-vehicle noise reduction, until a predicted noise value $L_{psi}$ satisfying a minimum total cost for in-vehicle noise reduction is outputted; a design parameter of each of the different regions of the to-be-designed vehicle and a design parameter of each of the sound source devices used to obtain the predicted noise value $L_{psi}$ are acquired to design a vehicle. By performing noise prediction iteratively based on the in-vehicle noise simulation-prediction-analysis model, a predicted noise value $L_{psi}$ that has no deviation and satisfies a minimum total cost for in-vehicle noise reduction is obtained, so that the method for optimizing and designing low in-vehicle noise has a short period, low cost and is not prone to deviation. In addition, the method does not require any subjective experience from a designer for vehicle design, and thereby has no subjectivity.

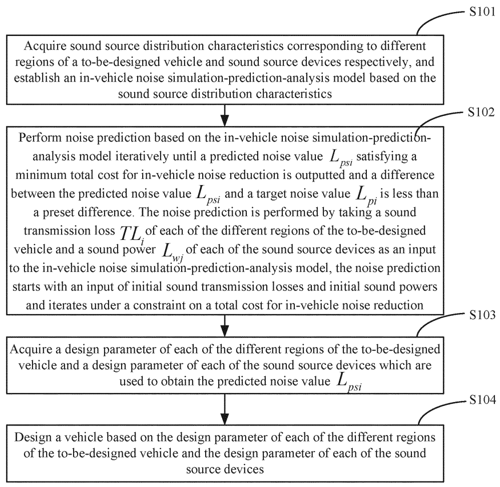


Figure 1

EP 4 002 188 A1

## Description

This application claims priority to Chinese Patent Application No. 202011028783.6, titled "METHOD AND SYSTEM FOR OPTIMIZING AND DESIGNING LOW IN-VEHICLE NOISE", filed on September 25, 2020 with the China National Intellectual Property Administration, which is incorporated herein by reference in its entirety.

## FIELD

The present disclosure relates to the technical field of acoustic simulation, and in particular to a method and a system for optimizing and designing low in-vehicle noise.

## BACKGROUND

With the rapid development of rail transit, a problem of noise of a rail transit vehicle is noticed. The noise of a rail transit vehicle usually includes off-vehicle noise and in-vehicle noise.

There are two methods mainly applied for researching noise of a rail transit vehicle, i.e., experimental analysis method and numerical simulation analysis method. In a process of controlling the in-vehicle noise by the experimental analysis method to improve an acoustic environment in a vehicle, many attempts and tests are performed to achieve the purpose of optimizing the in-vehicle noise. However, the experimental analysis method has problems of long period and high cost. In a process of controlling the in-vehicle noise by the numerical simulation analysis method, an experienced acoustic system engineer usually estimates a sound transmission loss required for each part of a body structure and sound source emitted from each device based on a target value of the in-vehicle noise in a vehicle design stage, and guides a low noise design for the vehicle based on the estimated value, thereby achieving the purpose of optimizing the in-vehicle noise. However, the numerical simulation analysis method significantly depends on subjective experience of the acoustic system engineer, and thus has problems of strong subjectivity and being prone to deviation.

It can be seen that the existing methods for optimizing and designing low in-vehicle noise has problems of long period, high cost, strong subjectivity, and being prone to deviation.

## SUMMARY

In view of this, a method and a system for optimizing and designing low in-vehicle noise is provided according embodiments of the present disclosure, in order to solve the problems of long period, high cost, strong subjectivity, and being prone to deviation existing in the conventional solution for optimizing the in-vehicle noise.

Technical solutions to achieve the objective are provided as follows according to embodiments of the present disclosure.

According a first aspect of the present disclosure, a method for optimizing and designing low in-vehicle noise is provided. The method includes:

acquiring sound source distribution characteristics corresponding to different regions of a to-be-designed vehicle and sound source devices respectively, and establishing an in-vehicle noise simulation-prediction-analysis model based on the sound source distribution characteristics;

performing noise prediction based on the in-vehicle noise simulation-prediction-analysis model iteratively until a predicted noise value $L_{psi}$ satisfying a minimum total cost for in-vehicle noise reduction is outputted and a difference between the predicted noise value $L_{psi}$ and a target noise value $L_{pi}$ is less than a preset difference, where the noise prediction is performed by taking a sound transmission loss $TL_i$ of each of the different regions of the to-be-designed vehicle and a sound power $L_{wj}$ of each of the sound source devices as an input to the in-vehicle noise simulation-prediction-analysis model, the noise prediction starts with an input of initial sound transmission losses and initial sound powers and iterates under a constraint on a total cost for in-vehicle noise reduction, and where the constraint on a total cost for in-vehicle noise reduction is expressed as

$$\begin{cases} L_{pi} \leq L_{psi} \\ \Delta TL_i \geq 0 \\ \Delta L_w \geq 0 \end{cases},$$

where $L_{pi}$ represents the target noise value, $\Delta TL_i$ represents an increment of the sound transmission loss of each of the different regions of the to-be-designed vehicle, $\Delta L_w$ represents a decrement of the sound power of each of the sound source devices, $i$ ranges from 1 to M, where M represents a total number of the different regions of the to-be-designed vehicle and is a positive integer greater than 1, and $j$ ranges from 1 to N, where N represents a total number of the sound source devices of the to-be-designed vehicle and is a positive integer greater than 1;

acquiring a design parameter of each of the different regions of the to-be-designed vehicle and a design parameter of each of the sound source devices which are used to obtain the predicted noise value $L_{psi}$ ; and

designing a vehicle based on the design parameter of each of the different regions of the to-be-designed vehicle and the design parameter of each of the sound source devices.

In a preferred embodiment, a process of performing the noise prediction based on the in-vehicle noise simulation-prediction-analysis model iteratively with starting with the input of the initial sound transmission losses and the initial sound powers and being under the constraint on a total cost for in-vehicle noise reduction includes:

acquiring initial design parameters of the vehicle, where the initial design parameters of the vehicle include a design parameter of each of the different regions of the vehicle and a design parameter of each of the sound source devices;

acquiring, based on the design parameter of each of the different regions of the vehicle, the initial sound transmission loss of the region;

acquiring, based on the design parameter of each of the sound source devices, the initial sound power of the sound source device;

performing the noise prediction by inputting the initial sound transmission loss of each of the regions and the initial sound power of each of the sound source devices to the in-vehicle noise simulation-prediction-analysis model, to obtain an initial predicted noise value;

performing calculation under the constraint on a total cost for in-vehicle noise reduction and based on a multivariate non-linear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_W$ of the sound power of each of the sound source devices under the minimum total cost for in-vehicle noise reduction;

determining an acoustic requirement indicated by the increment $\Delta TL_i$ of the sound transmission loss of each of the different regions under the minimum total cost for in-vehicle noise reduction and an acoustic requirement indicated by the decrement $\Delta L_W$ of the sound power of each of the sound source devices under the minimum total cost for in-vehicle noise reduction;

determining, based on the acoustic requirements, a design parameter and a new sound transmission loss corresponding to a noise reduction scheme for each of the different regions, and a design parameter and a new sound power of each of the sound source devices; and

performing the noise prediction by inputting the new sound transmission losses and the new sound powers to the in-vehicle noise simulation-prediction-analysis model, until the predicted noise value $L_{psi}$ satisfying the minimum total cost for in-vehicle noise reduction is outputted and the difference between the predicted noise value $L_{psi}$ and the target noise value $L_{pi}$ is less than the preset difference.

In a preferred embodiment, a process of performing calculation under the constraint on a total cost for in-vehicle noise reduction and based on the multivariate non-linear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_W$ of the sound power of each of the sound source devices under the minimum total cost for in-vehicle noise reduction includes:

calculating the minimum total cost for in-vehicle noise reduction under the constraint on a total cost for in-vehicle noise reduction, based on an equation expressing the total cost for in-vehicle noise reduction as $f=\sum_{i=1}^{M} k_i \Delta TL_i + \sum_{j=1}^{N} k_j \Delta L_w$ with adjusting values of the increment $\Delta TL_i$ of the sound transmission loss of each of the different regions and the decrement $\Delta L_W$ of the sound power of each of the sound source devices, where $k_i$ represents a cost corresponding to the increment $\Delta TL_i$ of the sound transmission loss, and $k_j$ represents a cost corresponding to the decrement $\Delta L_W$ of the sound power; and

determining the increment $\Delta TL_i$ of the sound transmission loss of each of the different regions under the minimum total cost for in-vehicle noise reduction, and the decrement $\Delta L_W$ of the sound power of each of the sound source devices under the minimum total cost for in-vehicle noise reduction.

In a preferred embodiment, the sound transmission losses of the different regions include a sound transmission loss of any one or more of following regions of the vehicle: a floor, a side wall, a roof, an end wall, a passenger compartment side door, a driver's cab door, a window, a windshield, and a front end of the driver's cab.

In a preferred embodiment, the sound powers of the sound source devices include a sound power of any one or more of a wheel and rail, an air conditioner,

a traction converter, an auxiliary converter, a traction motor, an air compressor, and a gear box.

According to a second aspect of the present disclosure, a system for optimizing and designing low in-vehicle noise is provided. The system includes:

an establishing unit, configured to acquire sound source distribution characteristics corresponding to different regions of a to-be-designed vehicle and sound source devices respectively, and establish an in-vehicle noise simulation-prediction-analysis model based on the sound source distribution characteristics;

an output unit, configured to perform noise prediction based on the in-vehicle noise simulation-prediction-analysis model iteratively until a predicted noise value $L_{psi}$ satisfying a minimum total cost for in-vehicle noise reduction is outputted and a difference between the predicted noise value $L_{psi}$ and a target noise value $L_{pi}$ is less than a preset difference, where the noise prediction is performed by taking a sound transmission loss $TL_i$ of each of the different regions of the to-be-designed vehicle and a sound power $L_{wj}$ of each of the sound source devices as an input to the in-vehicle noise simulation-prediction-analysis model, the noise prediction starts with an input of initial sound transmission losses and initial sound powers and iterates under a constraint on a total cost for in-vehicle noise reduction, and where the constraint on a total cost for in-vehicle noise reduction is expressed as

$$\begin{cases} L_{pi} \leq L_{psi} \\ \Delta TL_i \geq 0 \\ \Delta L_w \geq 0 \end{cases},$$

where $L_{pi}$ represents the target noise value, $\Delta TL_i$ represents an increment of the sound transmission loss of each of the different regions of the to-be-designed vehicle, $\Delta L_w$ represents a decrement of the sound power of each of the sound source devices, $i$ ranges from 1 to M, where M represents a total number of the different regions of the to-be-designed vehicle and is a positive integer greater than 1, and $j$ ranges from 1 to N, where N represents a total number of the sound source devices of the to-be-designed vehicle and is a positive integer greater than 1;

an acquiring unit, configured to acquire a design parameter of each of the different regions of the to-be-designed vehicle and a design parameter of each of the sound source devices which are used to obtain the predicted noise value $L_{psi}$ ; and

a design unit, configured to design a vehicle based on the design parameter of each of the different regions of the to-be-designed vehicle and the design parameter of each of the sound source devices.

In a preferred embodiment, the output unit that performs the noise prediction based on the in-vehicle noise simulation-prediction-analysis model iteratively with starting with the input of the initial sound transmission losses and the initial sound powers and being under the constraint on a total cost for in-vehicle noise reduction includes:

a first acquiring module configured to acquire initial design parameters of the vehicle, where the initial design parameters of the vehicle include a design parameter of each of the different regions of the vehicle and a design parameter of each of the sound source devices;

a second acquiring module configured to acquire, based on the design parameter of each of the different regions of the vehicle, the initial sound transmission loss of the region;

a third acquiring module configured to acquire, based on the design parameter of each of the sound source devices, the initial sound power of the sound source device;

a predicting module configured to perform the noise prediction by inputting the initial sound transmission loss of each of the regions and the initial sound power of each of the sound source devices to the in-vehicle noise simulation-prediction-analysis model, to obtain an initial predicted noise value;

a calculating module configured to perform calculation under the constraint on a total cost for in-vehicle noise reduction and based on a multivariate nonlinear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction;

a first determining module configured to determine an acoustic requirement indicated by the increment $\Delta TL_i$ of the sound transmission loss of each of the different regions under the minimum total cost for in-vehicle noise reduction and an acoustic requirement indicated by the decrement $\Delta L_w$ of the sound power of each of the sound source devices under the minimum total cost for in-vehicle noise reduction;

a second determining module configured to determine, based on the acoustic requirements, a design parameter and a new sound transmission loss corresponding to a noise reduction scheme for each of the different regions, and a design parameter and a new sound power of each of the sound source devices; and

an output module configured to perform the noise prediction by inputting the new sound transmission losses and the new sound powers to the in-vehicle noise simulation-prediction-analysis model, until the predicted noise value $L_{psi}$ satisfying the minimum total cost for in-vehicle noise reduction is outputted and the difference between the predicted noise value $L_{psi}$ and the target noise value $L_{pi}$ is less than the preset difference.

In a preferred embodiment, the calculating module includes:

a calculating sub-module configured to calculate the minimum total cost for in-vehicle noise reduction under the constraint on a total cost for in-vehicle noise reduction, based on an equation expressing the total cost for in-vehicle noise reduction as $f=\sum_{i=1}^{M} k_i \Delta TL_i + \sum_{j=1}^{N} k_j \Delta L_w$ with adjusting values of the increment $\Delta TL_i$ of the sound transmission loss of each of the different regions and the decrement $\Delta L_w$ of the sound power of each of the sound source devices, where $k_i$ represents a cost corresponding to the increment $\Delta TL_i$ of the sound transmission loss, and $k_j$ represents a cost corresponding to the decrement $\Delta L_w$ of the sound power; and

a determining sub-module configured to determine the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction.

According to the above technical solutions, a noise prediction is performed iteratively based on the in-vehicle noise simulation-prediction-analysis model, which guarantees to obtain a predicted noise value $L_{psi}$ that has no deviation and satisfies a minimum total cost for in-vehicle noise reduction, so that the method for optimizing and designing low in-vehicle noise has a short period, low cost and is not prone to deviation. In addition, the method does not require any subjective experience from a designer for vehicle design, and thereby has no subjectivity.

## BRIEF DESCRIPTION OF THE DRAWINGS

For clearer illustration of the technical solutions according to embodiments of the present disclosure or conventional techniques, hereinafter are briefly described the drawings to be applied in embodiments of the present disclosure or conventional technology. Apparently, the drawings in the following descriptions are only some embodiments of the present disclosure, and those skilled in the art can derive other drawings from these drawings without any creative effort.

Figure 1 is a schematic flow chart of a method for optimizing and designing low in-vehicle noise according to an embodiment of the present disclosure;

Figure 2 is a schematic flow chart of a process of performing noise prediction based on an in-vehicle noise simulation-prediction-analysis model iteratively according to an embodiment of the present disclosure;

Figure 3 is a schematic diagram showing a vehicle design according to an embodiment of the present disclosure; and

Figure 4 is a schematic structural diagram of a system for optimizing and designing low in-vehicle noise according to an embodiment of the present disclosure.

## DETAILED DESCRIPTION

The technical solutions in the embodiments of the present disclosure are clearly and completely described in the following with reference to the accompanying drawings in the embodiments of the present disclosure. Apparently, the embodiments described herein are only a part rather than all of the embodiments of the present disclosure. Any other embodiments obtained by those skilled in the art based on the embodiments in the present disclosure without any creative work fall within the protection scope of the present disclosure.

In this specification, terms "include", "comprise" or any other variants thereof are intended to be non-exclusive. Therefore, a process, method, article or device including a series of elements includes not only these elements but also elements that are not enumerated, or elements that are inherent to the process, method, article or device. Unless expressively limited otherwise, a process, method, article or device limited by "comprising/including a(n) ..." does not exclude existence of another identical element in such process, method, article or device.

As described in the background section, there are two methods mainly applied for researching noise of a rail transit vehicle, i.e., experimental analysis method and numerical simulation analysis method. However, the

experimental analysis method has problems of long period and high cost; and the numerical simulation analysis method significantly depends on subjective experience of the acoustic system engineer, and thus has problems of strong subjectivity and being prone to deviation.

As can be seen, the existing methods for optimizing and designing in-vehicle noise has problems of long period, high cost, strong subjectivity, and being prone to deviation.

To solve the problems, a method and a system for optimizing and designing low in-vehicle noise are provided, which perform noise prediction based on an in-vehicle noise simulation-prediction-analysis model iteratively to obtain a predicted noise value $L_{psi}$ that has no deviation and satisfies a minimum total cost for in-vehicle noise reduction, so as to achieve an objective that the method for optimizing and designing low in-vehicle noise has a short period, low cost and is not prone to deviation. In addition, the method does not require any subjective experience from a designer for vehicle design, and thereby has no subjectivity. The present disclosure solves the problems of long period, high cost, strong subjectivity and easy deviation in the existing solution for optimizing in-vehicle noise. Specific implementations are described in the following embodiments.

Figure 1 is a schematic flow chart of a method for optimizing and designing low in-vehicle noise according to an embodiment of the present disclosure. As shown in Figure 1, the method includes steps S101 to S104 as follows.

In step S101, acquire sound source distribution characteristics corresponding to different regions of a to-be-designed vehicle and sound source devices respectively, and establish an in-vehicle noise simulation-prediction-analysis model based on the sound source distribution characteristics.

In a specific implementation of step S101, the in-vehicle noise simulation-prediction-analysis model is established based on a statistical energy analysis theory and the sound source distribution characteristics corresponding to the different regions of the to-be-designed vehicle and the sound source devices.

The different regions of the to-be designed vehicle include a floor, a side wall, a roof, an end wall, a passenger compartment side door, a driver's cab door, a window, a windshield, a front end of the driver's cab, and the like. The sound source devices include: a wheel and rail, an air conditioner, a traction converter, an auxiliary converter, a traction motor, an air compressor, a gear box, and other auxiliary devices.

The sound source distribution characteristics are related to the different regions of the to-be-designed vehicle and positions of the sound source devices. The different regions of the to-be designed vehicle correspond to different sound source distribution characteristics, and the sound source devices at different positions correspond to different sound source distribution characteristics. When the different regions of the to-be-designed vehicle and positions of the sound source devices are determined, the sound source distribution characteristics corresponding to the different regions of to-be-designed vehicle and the sound source devices may be determined.

An example is provided to facilitate understanding a process of acquiring sound source distribution characteristics corresponding to different regions of a to-be-designed vehicle and sound source devices. For example, in a case where a sound source device is an air conditioner mounted on a side wall, a sound source distribution characteristic corresponding to such case may be obtained.

In step S102, perform noise prediction based on the in-vehicle noise simulation-prediction-analysis model iteratively until a predicted noise value $L_{psi}$ satisfying a minimum total cost for in-vehicle noise reduction is outputted and a difference between the predicted noise value $L_{psi}$ and a target noise value $L_{pi}$ is less than a preset difference. The noise prediction is performed by taking a sound transmission loss $TL_i$ of each of the different regions of the to-be-designed vehicle and a sound power $L_{wj}$ of each of the sound source devices as an input to the in-vehicle noise simulation-prediction-analysis model, the noise prediction starts with an input of initial sound transmission losses and initial sound powers and iterates under a constraint on a total cost for in-vehicle noise reduction.

In step S102, the constraint on a total cost for in-vehicle noise reduction is expressed as

$$\begin{cases} L_{pi} \le L_{psi} \\ \Delta TL_i \ge 0 \\ \Delta L_w \ge 0 \end{cases},$$

where $L_{pi}$ represents the target noise value, $\Delta TL_i$ represents an increment of the sound transmission loss of each of the different regions of the to-be-designed vehicle, $\Delta L_w$ represents a decrement of the sound power of each of the sound source devices, *i* ranges from 1 to M, where M represents a total number of the different regions of the to-be-designed vehicle and is a positive integer greater than 1, and *j* ranges from 1 to N, where N represents a total number of the sound source devices of the to-be-designed vehicle and is a positive integer greater than 1.

It should be noted that the sound transmission losses $TL_i$ of the different regions include a sound transmission loss of any one or more of following regions of the vehicle: a floor, a side wall, a roof, an end wall, a passenger compartment side door, a driver's cab door, a window, a windshield, and a front end of the driver's cab.

The sound powers $L_{wj}$ of the sound source devices include a sound power of any one or more of a

wheel and rail, an air conditioner, a traction converter, an auxiliary converter, a traction motor, an air compressor, and a gear box.

The initial sound transmission losses are determined based on initial design parameters of the different regions of the vehicle. The initial sound powers are determined based on initial design parameters of the sound sources devices. The preset difference may be equal to 3, 5 or the like, which is set based on an actual situation and is not specifically limited herein.

In step S103, acquire a design parameter of each of the different regions of the to-be-designed vehicle and a design parameter of each of the sound source devices which are used to obtain the predicted noise value $L_{psi}$.

In a specific implementation of step S103, the predicted noise value $L_{psi}$ is obtained when the minimum total cost for in-vehicle noise reduction is satisfied, and the design parameter of each of the different regions of the to-be-designed vehicle and the design parameter of each of the sound source devices used to obtain the predicted noise value $L_{psi}$ are acquired.

In an embodiment, the design parameters of the different regions of the to-be-designed vehicle used to obtain the predicted noise value $L_{psi}$ include: a thickness and material of the floor of the vehicle, a thickness and material of the side wall of the vehicle, a thickness and material of the roof of the vehicle, a thickness and material of the end wall of the vehicle, a thickness and material of the passenger compartment side door of the vehicle, a thickness and material of the driver's cab door of the vehicle, a thickness and material of the window of the vehicle, a thickness and material of the windshield of the vehicle, and a thickness and material of the front end of the driver's cab of the vehicle.

The design parameters of the sound source devices of the to-be-designed vehicle used to obtain the predicted noise value $L_{psi}$ include: the sound power of the wheel and rail of the vehicle, the sound power of the air conditioner of the vehicle, the sound power of the traction converter of the vehicle, the sound power of the auxiliary converter of the vehicle, the sound power of the traction motor of the vehicle, the sound power of the air compressor of the vehicle, and the sound power of the gear box of the vehicle.

In step S104, design a vehicle based on the design parameter of each of the different regions of the to-be-designed vehicle and the design parameter of each of the sound source devices.

The vehicle is designed based on the design parameter of each of the different regions of the to-be-designed vehicle and the design parameter of each of the sound source devices, so as to optimize the in-vehicle noise with the minimum total cost for in-vehicle noise reduction.

Specifically, the vehicle is designed based on the following design parameters of the to-be-designed vehicle: the thickness and material of regions of the vehicle such as the floor, the side wall, the roof, the end wall, the passenger compartment side door, the driver's cab door, the window, the windshield and the front end of the driver's cab; and the sound power of auxiliary devices of the vehicle such as the wheel and rail, the air conditioner, the traction converter, the auxiliary converter, the traction motor, the air compressor, and the gear box.

In the method for optimizing and designing low in-vehicle noise according to the embodiments of the present disclosure, noise prediction is performed based on the in-vehicle noise simulation-prediction-analysis model iteratively to obtain a predicted noise value $L_{psi}$ that has no deviation and takes a minimum total cost for in-vehicle noise reduction, so that the method for optimizing and designing low in-vehicle noise has a short period, low cost, and is not prone to deviation. In addition, the method does not require any subjective experience from a designer for vehicle design, and thereby has no subjectivity.

In the method for optimizing and designing low in-vehicle noise disclosed in Figure 1 according to an embodiment of the present disclosure, step S102 involves a process of performing the noise prediction based on the in-vehicle noise simulation-prediction-analysis model iteratively with starting with the input of the initial sound transmission losses and the initial sound powers and being under the constraint on a total cost for in-vehicle noise reduction. Figure 2 shows a schematic flow chart of the process of performing noise prediction based on the in-vehicle noise simulation-prediction-analysis model iteratively. As shown in Figure 2, the process includes steps S201 to S208 as follows.

In step S201, acquire initial design parameters of the vehicle.

The initial design parameters of the vehicle include a design parameter of each of the different regions of the vehicle and a design parameter of each of the sound source devices.

The design parameters of the different regions of the vehicle include a thickness and material of the following regions of the vehicle: a floor, a side wall, a roof, an end wall, a passenger compartment side door, a driver's cab door, a window, a windshield, a front end of the driver's cab.

The design parameters of the sound source devices include a sound power of the following sound source devices of the vehicle: a wheel and rail, an air conditioner, a traction converter, an auxiliary converter, a traction motor, an air compressor, a gear box.

In step S202, acquire, based on the design parameter of each of the different regions of the vehicle, the initial sound transmission loss of the region.

In step S202, the initial sound transmission loss depends on an initial design parameter of the different regions of the vehicle.

An example is provided to facilitate understanding the process of acquiring the initial sound transmission

loss of each of the regions based on the design parameter of the region of the vehicle in step S202. For example, it is determined, based on the thickness and material of a side wall of the vehicle, that the initial sound transmission loss of the side wall of the vehicle is 20db; and it is determined, based on the thickness and material of a roof of the vehicle, that the initial sound transmission loss of the roof of the vehicle is 35db.

In step S203, acquire, based on the design parameter of each of the sound source devices, the initial sound power of the sound source device.

The initial sound power depends on an initial design parameter of the sound source device.

An example is provided to facilitate understanding the process of acquiring the initial sound power of each of the sound source devices based on the design parameter of the sound source device in step S203. For example, it is determined that the initial sound power of the sound source device being a wheel and rail is 110db based on the sound source device being a wheel and rail, and it is determined that the initial sound transmission loss of the sound source device being an air conditioner is 76db based on the sound source device being an air conditioner.

In step S204, perform the noise prediction by inputting the initial sound transmission loss of each of the regions and the initial sound power of each of the sound source devices to the in-vehicle noise simulation-prediction-analysis model, to obtain an initial predicted noise value.

Since the predicted noise value that satisfies the minimum total cost for in-vehicle noise reduction is required to be outputted, it is required to input the initial sound transmission loss of each of the regions and the initial sound power of each of the sound source devices to the in-vehicle noise simulation-prediction-analysis model for noise prediction to obtain an initial predicted noise value, and then the noise prediction is performed based on the in-vehicle noise simulation-prediction-analysis model iteratively with starting with the initial sound transmission losses and the initial sound powers, until the predicted noise value $L_{psi}$ that satisfies the minimum total cost for in-vehicle noise reduction is outputted.

In step S205, perform calculation under the constraint on a total cost for in-vehicle noise reduction and based on a multivariate non-linear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction.

Specifically, a process of obtaining the minimum total cost for in-vehicle noise reduction, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction is described as follows.

First, the minimum total cost for in-vehicle noise reduction is calculated under the constraint on a total cost for in-vehicle noise reduction, based on an equation expressing the total cost for in-vehicle noise reduction as $f=\sum_{i=1}^{M} k_i \Delta TL_i + \sum_{j=1}^{N} k_j \Delta L_w$ with adjusting values of the increment $\Delta TL_i$ of the sound transmission loss of each of the different regions and the decrement $\Delta L_w$ of the sound power of each of the sound source devices. Then, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction are determined.

In the description, f represents the total cost for in-vehicle noise reduction, $k_i$ represents a cost corresponding to the increment $\Delta TL_i$ of the sound transmission loss, and $k_j$ represents a cost corresponding to the decrement $\Delta L_w$ of the sound power. The minimum total cost for in-vehicle noise reduction indicates an optimized situation regarding the total cost for in-vehicle noise reduction.

An example is provided to facilitate understanding the process of adjusting the increment $\Delta TL_i$ of the sound transmission loss. For example, a value of the sound transmission loss of a floor is 10db and is required to be increased to 12db, then the increment $\Delta TL_i$ of the sound transmission loss of the floor is calculated as 12db-10db=2db. An example is provided to facilitate understanding the process of adjusting the decrement $\Delta L_w$ of the sound power of the sound source device. For example, a value of the sound power of an air conditioner is 110db and is required to be decreased to 100db, then the decrement $\Delta L_w$ of the sound power of the air conditioner is calculated as 110db-100db=10db.

In step S206, determine an acoustic requirement indicated by the increment of the sound transmission loss of each of the different regions under the minimum total cost for in-vehicle noise reduction and an acoustic requirement indicated by the decrement of the sound power of each of the sound source devices under the minimum total cost for in-vehicle noise reduction.

In step S206, a first acoustic requirement of each of the different regions indicated by the increment $\Delta TL_i$ of the sound transmission loss of the region under the minimum total cost is acquired, and a second acoustic requirement of each of the sound source devices indicated by the decrement $\Delta L_w$ of the sound power of the sound source device under the minimum total cost is required. The first acoustic requirement characterizes the sound transmission loss of the region under the minimum

cost for in-vehicle noise reduction. The second acoustic requirement characterizes the sound power of the sound source device under the minimum cost for in-vehicle noise reduction.

In step S207, determine, based on the acoustic requirements, a design parameter and a new sound transmission loss corresponding to a noise reduction scheme for each of the different regions, and a design parameter and a new sound power of each of the sound source devices.

In step S207, a parameter of material for constructing each of the different regions is acquired based on the noise reduction scheme for the region corresponding to the first acoustic requirement, and the new sound transmission loss corresponding to the region is acquired based on the parameter of material. An adjusting parameter of each of the sound source devices is acquired based on the noise reduction scheme for the sound source device corresponding to the second acoustic requirement, and the new sound power corresponding to the sound source device is acquired based on the adjusting parameter.

An example is provided to facilitate understanding the process of acquiring a parameter of material for constructing each of the different regions based on the noise reduction scheme for the region corresponding to the first acoustic requirement and acquiring the new sound transmission loss corresponding to the region based on the parameter of material in step S207. For example, if a value of the sound transmission loss of the floor is 42db, the noise reduction scheme is to apply carbon fiber cotton material with a thickness of 3cm onto the floor based on the sound transmission loss being 42db, and a value of the new sound transmission loss of the floor is 35db based on the carbon fiber cotton material with a thickness of 3cm.

An example is provided to facilitate understanding the process of acquiring an adjusting parameter of each of the sound source devices based on the noise reduction scheme for the sound source device corresponding to the second acoustic requirement, and acquiring the new sound power corresponding to the sound source device based on the adjusting parameter in step S207. For example, if a value of the sound power of the air conditioner is 76db, the noise reduction scheme is to decreases the sound power of the air conditioner to 50db, that is, an adjusting parameter of the air conditioner is calculated as 76db-50db=26db, and a value of the new sound power of the air conditioner is obtained as 50db based on the adjusting parameter 26db.

In step S208, perform the noise prediction by inputting the new sound transmission losses and the new sound powers to the in-vehicle noise simulation-prediction-analysis model, until the predicted noise value $L_{psi}$ satisfying the minimum total cost for in-vehicle noise reduction is outputted and the difference between the predicted noise value $L_{psi}$ and the target noise value $L_{pi}$ is less than the preset difference.

An example is provided as follows to facilitate understanding of the process of perform the noise prediction by inputting the new sound transmission losses and the new sound powers to the in-vehicle noise simulation-prediction-analysis model, until the predicted noise value $L_{psi}$ satisfying the minimum total cost for in-vehicle noise reduction is outputted. For example, the new sound transmission loss and the new sound power are inputted to the in-vehicle noise simulation-prediction-analysis model for noise prediction, if the difference between the predicted noise value $L_{psi}$ and the target noise value $L_{pi}$ is greater than or equal to the preset difference, a second process of acquiring a new sound transmission loss and a new sound power is performed. In the second process, a parameter of material for constructing each of the different regions is acquired based on the noise reduction scheme for the region corresponding to the first acoustic requirement, and a new sound transmission loss corresponding to the region is acquired based on the parameter of material; and an adjusting parameter of each of the sound source devices is acquired based on the noise reduction scheme for the sound source device corresponding to the second acoustic requirement, and a new sound power corresponding to the sound source device is acquired based on the adjusting parameter. The new sound transmission loss and new sound power acquired in the second process are inputted to the in-vehicle noise simulation-prediction-analysis model for noise prediction. The process is performed repeatedly until the difference between the outputted predicted noise value $L_{psi}$ and the target noise value $L_{pi}$ is less than the preset difference, then this predicted noise value $L_{psi}$ satisfying the minimum total cost for in-vehicle noise reduction is outputted.

According to the embodiment of the present disclosure, an in-vehicle noise reduction scheme is optimized based on a cost consideration by using the non-linear programming theory, so as to make the noise reduction scheme efficient enough. In this way, acoustic requirements of different regions of a vehicle are arranged systematically, reasonably and effectively, so that the designed vehicle has a better noise reduction effect.

In the aforementioned step S104, a vehicle is designed based on the design parameter of each of the different regions of the to-be-designed vehicle and the design parameter of each of the sound source devices. Figure 3 is a schematic diagram showing a design of a vehicle.

In Figure 3, the design parameters of different regions of the to-be-designed vehicle include: a thickness and material of a side wall, a thickness and material of a roof, a thickness and material of a passenger compartment side door, a thickness and material of a driver's cab door, a thickness and material of a window, a thickness and material of a windshield, a thickness and material of a front end of the driver's cab, and a thickness and material of other regions.

The design parameters of the sound source devices of the to-be-designed vehicle include: a sound power of a wheel and rail of the vehicle, a sound power of an air conditioner of the vehicle, a sound power of a traction converter of the vehicle, a sound power of an auxiliary converter of the vehicle, a sound power of a traction motor of the vehicle, a sound power of an air compressor of the vehicle, a sound power of a gear box of the vehicle, and a sound power of other auxiliary devices.

In the embodiment of the present disclosure, a vehicle is designed based on the design parameters of different regions of the to-be-designed vehicle and the design parameters of the sound source devices of the to-be-designed vehicle, so as to make a noise reduction scheme efficient enough. In this way, the vehicle is designed by using the design parameters of different regions of the to-be-designed vehicle and the design parameters of the sound source devices of the to-be-designed vehicle in a reasonable and effective manner, without requirement for any subjective experience from a designer, thereby having no subjectivity.

Based on the method for optimizing and designing low in-vehicle noise disclosed in the embodiment referring to Figure 1, a system for optimizing and designing low in-vehicle noise is disclosed according to an embodiment of the present disclosure. As shown in Figure 4, the system for optimizing and designing low in-vehicle noise mainly includes an establishing unit 401, an output unit 402, an acquiring unit 403, and a design unit 404.

The establishing unit 401 is configured to acquire sound source distribution characteristics corresponding to different regions of a to-be-designed vehicle and sound source devices respectively, and establish an in-vehicle noise simulation-prediction-analysis model based on the sound source distribution characteristics.

The in-vehicle noise simulation-prediction-analysis model is established based on a statistical energy analysis theory and the sound source distribution characteristics corresponding to the different regions of the to-be-designed vehicle and the sound source devices.

The different regions of the to-be designed vehicle mentioned in the description of the establishing unit 401 include a floor, a side wall, a roof, an end wall, a passenger compartment side door, a driver's cab door, a window, a windshield, a front end of the driver's cab, and the like.

The sound source devices mentioned in the description of the establishing unit 401 include: a wheel and rail, an air conditioner, a traction converter, an auxiliary converter, a traction motor, an air compressor, a gear box, and other auxiliary devices.

The sound source distribution characteristics are related to the different regions of the to-be-designed vehicle and positions of the sound source devices. The different regions of the to-be designed vehicle correspond to different sound source distribution characteristics, and the sound source devices at different positions correspond to different sound source distribution characteristics.

The output unit 402 is configured to perform noise prediction based on the in-vehicle noise simulation-prediction-analysis model iteratively until a predicted noise value $L_{psi}$ satisfying a minimum total cost for in-vehicle noise reduction is outputted and a difference between the predicted noise value $L_{psi}$ and a target noise value $L_{pi}$ is less than a preset difference, where the noise prediction is performed by taking a sound transmission loss $TL_i$ of each of the different regions of the to-be-designed vehicle and a sound power $L_{wj}$ of each of the sound source devices as an input to the in-vehicle noise simulation-prediction-analysis model, the noise prediction starts with an input of initial sound transmission losses and initial sound powers and iterates under a constraint on a total cost for in-vehicle noise reduction.

The constraint on a total cost for in-vehicle noise reduction is expressed as

$$\begin{cases} L_{pi} \leq L_{psi} \\ \Delta TL_i \geq 0 \\ \Delta L_w \geq 0 \end{cases},$$

where $L_{pi}$ represents the target noise value, $\Delta TL_i$ represents an increment of the sound transmission loss of each of the different regions of the to-be-designed vehicle, $\Delta L_w$ represents a decrement of the sound power of each of the sound source devices, *i* ranges from 1 to M, where M represents a total number of the different regions of the to-be-designed vehicle and is a positive integer greater than 1, and *j* ranges from 1 to N, where N represents a total number of the sound source devices of the to-be-designed vehicle and is a positive integer greater than 1.

The sound transmission losses $TL_i$ of the different regions include a sound transmission loss of any one or more of following regions of the vehicle: a floor, a side wall, a roof, an end wall, a passenger compartment side door, a driver's cab door, a window, a windshield, and a front end of the driver's cab.

The sound powers $L_{wj}$ of the sound source devices include a sound power of any one or more of a wheel and rail, an air conditioner, a traction converter, an auxiliary converter, a traction motor, an air compressor, and a gear box.

In a further embodiment, the output unit 402 includes a first acquiring module, a second acquiring module, a third acquiring module, a predicting module, a calculating module, a determining module, a fourth acquiring module, a fifth acquiring module and an output module.

The first acquiring module is configured to acquire initial design parameters of the vehicle. The initial

design parameters of the to-be-designed vehicle include a design parameter of each of the different regions of the vehicle and a design parameter of each of the sound source devices.

The second acquiring module is configured to acquire, based on the design parameter of each of the different regions of the vehicle, the initial sound transmission loss of the region.

The third acquiring module is configured to acquire, based on the design parameter of each of the sound source devices, the initial sound power of the sound source device.

The predicting module is configured to perform the noise prediction by inputting the initial sound transmission loss of each of the regions and the initial sound power of each of the sound source devices to the in-vehicle noise simulation-prediction-analysis model, to obtain an initial predicted noise value.

The calculating module is configured to perform calculation under the constraint on a total cost for in-vehicle noise reduction and based on a multivariate non-linear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction.

In a further embodiment, the calculating module includes a calculating sub-module and a determining sub-module.

The calculating sub-module is configured to calculate the minimum total cost for in-vehicle noise reduction under the constraint on a total cost for in-vehicle noise reduction, based on an equation expressing the total cost for in-vehicle noise reduction as

$$f=\sum_{i=1}^{M}k_i\Delta TL_i+\sum_{j=1}^{N}k_j\Delta L_w$$

with adjusting values of the increment $\Delta TL_i$ of the sound transmission loss of each of the different regions and the decrement $\Delta L_w$ of the sound power of each of the sound source devices, where $k_i$ represents a cost corresponding to the increment $\Delta TL_i$ of the sound transmission loss, and $k_j$ represents a cost corresponding to the decrement $\Delta L_w$ of the sound power.

The determining sub-module is configured to determine the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction.

The first determining module is configured to determine an acoustic requirement indicated by the increment $\Delta TL_i$ of the sound transmission loss of each of the different regions under the minimum total cost for in-vehicle noise reduction and an acoustic requirement indicated by the decrement $\Delta L_w$ of the sound power of each of the sound source devices under the minimum total cost for in-vehicle noise reduction.

The second determining module is configured to determine, based on the acoustic requirements, a design parameter and a new sound transmission loss corresponding to a noise reduction scheme for each of the different regions, and a design parameter and a new sound power of each of the sound source devices.

The output module is configured to perform the noise prediction by inputting the new sound transmission losses and the new sound powers to the in-vehicle noise simulation-prediction-analysis model, until the predicted noise value $L_{psi}$ satisfying the minimum total cost for in-vehicle noise reduction is outputted and the difference between the predicted noise value $L_{psi}$ and the target noise value $L_{pi}$ is less than the preset difference.

The acquiring unit 403 is configured to acquire a design parameter of each of the different regions of the to-be-designed vehicle and a design parameter of each of the sound source devices which are used to obtain the predicted noise value $L_{psi}$.

The predicted noise value $L_{psi}$ is obtained when the minimum total cost for in-vehicle noise reduction is satisfied, and the design parameter of each of the different regions of the to-be-designed vehicle and the design parameter of each of the sound source devices used to obtain the predicted noise value $L_{psi}$ are acquired.

The design parameters of the different regions of the to-be-designed vehicle used to obtain the predicted noise value $L_{psi}$ include: a thickness and material of the floor of the vehicle, a thickness and material of the side wall of the vehicle, a thickness and material of the roof of the vehicle, a thickness and material of the end wall of the vehicle, a thickness and material of the passenger compartment side door of the vehicle, a thickness and material of the driver's cab door of the vehicle, a thickness and material of the window of the vehicle, a thickness and material of the windshield of the vehicle, and a thickness and material of the front end of the driver's cab of the vehicle.

The design parameters of the sound source devices of the to-be-designed vehicle used to obtain the predicted noise value $L_{psi}$ include: the sound power of the wheel and rail of the vehicle, the sound power of the air conditioner of the vehicle, the sound power of the traction converter of the vehicle, the sound power of the auxiliary converter of the vehicle, the sound power of the traction motor of the vehicle, the sound power of the air compressor of the vehicle, and the sound power of the gear box of the vehicle.

The design unit 404 is configured to design a vehicle based on the design parameter of each of the different regions of the to-be-designed vehicle and the design parameter of each of the sound source devices.

The vehicle is designed based on the design

parameter of each of the different regions of the to-be-designed vehicle and the design parameter of each of the sound source devices, such that the in-vehicle noise is optimized under the minimum total cost for in-vehicle noise reduction.

A system for optimizing and designing low in-vehicle noise is provided according to the embodiments of the present disclosure, in which noise prediction is performed iteratively based on an in-vehicle noise simulation-prediction-analysis model to obtain a predicted noise value $L_{psi}$ that has no deviation and takes a minimum total cost for in-vehicle noise reduction. The system for optimizing and designing low in-vehicle noise according to the present disclosure has a short period, low cost, and is not prone to deviation. In addition, the system does not require any subjective experience from a designer when designing a vehicle, and thereby has no subjectivity.

The above method embodiments are described as combinations of a series of actions for the sake of brevity, but those skilled in the art should understand that the present disclosure is not limited to the described sequence of the actions, because some of the steps can be performed in another sequence or concurrently according to the present disclosure. In addition, those skilled in the art should also understand that embodiments described in the specification are preferred embodiments. Actions and modules involved in these embodiments are not necessarily required for the present disclosure.

It is noted that the embodiments in this specification are described in a progressive manner. Each embodiment focuses on any difference from others, and the same or similar parts among the embodiments can be referred to each other. The system embodiment is basically similar to the method embodiment, and therefore is described briefly, and for related parts, reference may be made to descriptions of the method embodiment.

The steps in the method according to the embodiments of the present disclosure may be adjusted, combined and deleted as needed.

It should be further noted that, the relationship terms such as "first", "second" and the like are used herein merely to distinguish one entity or operation from another, rather than to necessitate or imply existence of the actual relationship or order of the entities or operations.

Those skilled in the art can implement or practice the present disclosure based on the above description of the disclosed embodiments. Various modifications to these embodiments are obvious to those skilled in the art. The general principles defined in the present disclosure may be implemented in other embodiments without departing from the spirit and scope of the present disclosure. Therefore, the present disclosure should not be limited to the embodiments disclosed herein, but conforms to the widest scope consistent with the principle and novel features disclosed in the specification.

The above description is only preferable embodiments of the present disclosure. It should be noted that those skilled in the art can make improvements and modifications without departing from the principle of the present disclosure. These improvements and modifications shall also fall within the protection scope of the present disclosure.

## Claims

1. A method for optimizing and designing low in-vehicle noise, comprising:

   acquiring sound source distribution characteristics corresponding to different regions of a to-be-designed vehicle and sound source devices respectively, and establishing an in-vehicle noise simulation-prediction-analysis model based on the sound source distribution characteristics;
   performing noise prediction based on the in-vehicle noise simulation-prediction-analysis model iteratively until a predicted noise value $L_{psi}$ satisfying a minimum total cost for in-vehicle noise reduction is outputted and a difference between the predicted noise value $L_{psi}$ and a target noise value $L_{pi}$ is less than a preset difference, wherein the noise prediction is performed by taking a sound transmission loss $TL_i$ of each of the different regions of the to-be-designed vehicle and a sound power $L_{wj}$ of each of the sound source devices as an input to the in-vehicle noise simulation-prediction-analysis model, the noise prediction starts with an input of initial sound transmission losses and initial sound powers and iterates under a constraint on a total cost for in-vehicle noise reduction, and wherein the constraint on a total cost for in-vehicle noise reduction is expressed as

$$\begin{cases} L_{pi} \le L_{psi} \\ \Delta TL_i \ge 0 \\ \Delta L_w \ge 0 \end{cases},$$

   where $L_{pi}$ represents the target noise value, $\Delta TL_i$ represents an increment of the sound transmission loss of each of the different regions of the to-be-designed vehicle, $\Delta L_w$ represents a decrement of the sound power of each of the sound source devices, *i* ranges from 1 to M, where M represents a total number of the different regions of the to-be-designed vehicle and is a positive integer greater than 1, and *j* ranges from 1 to N, where N represents a total number of the sound

source devices of the to-be-designed vehicle and is a positive integer greater than 1;
acquiring a design parameter of each of the different regions of the to-be-designed vehicle and a design parameter of each of the sound source devices which are used to obtain the predicted noise value $L_{psi}$; and
designing a vehicle based on the design parameter of each of the different regions of the to-be-designed vehicle and the design parameter of each of the sound source devices.

2. The method according to claim 1, wherein a process of performing the noise prediction based on the in-vehicle noise simulation-prediction-analysis model iteratively with starting with the input of the initial sound transmission losses and the initial sound powers and being under the constraint on a total cost for in-vehicle noise reduction comprises:

acquiring initial design parameters of the vehicle, wherein the initial design parameters of the vehicle comprise a design parameter of each of the different regions of the vehicle and a design parameter of each of the sound source devices;
acquiring, based on the design parameter of each of the different regions of the vehicle, the initial sound transmission loss of the region;
acquiring, based on the design parameter of each of the sound source devices, the initial sound power of the sound source device;
performing the noise prediction by inputting the initial sound transmission loss of each of the regions and the initial sound power of each of the sound source devices to the in-vehicle noise simulation-prediction-analysis model, to obtain an initial predicted noise value;
performing calculation under the constraint on a total cost for in-vehicle noise reduction and based on a multivariate non-linear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction;
determining an acoustic requirement indicated by the increment $\Delta TL_i$ of the sound transmission loss of each of the different regions under the minimum total cost for in-vehicle noise reduction and an acoustic requirement indicated by the decrement $\Delta L_w$ of the sound power of each of the sound source devices under the minimum total cost for in-vehicle noise reduction;
determining, based on the acoustic requirements, a design parameter and a new sound transmission loss corresponding to a noise reduction scheme for each of the different regions, and a design parameter and a new sound power of each of the sound source devices; and
performing the noise prediction by inputting the new sound transmission losses and the new sound powers to the in-vehicle noise simulation-prediction-analysis model, until the predicted noise value $L_{psi}$ satisfying the minimum total cost for in-vehicle noise reduction is outputted and the difference between the predicted noise value $L_{psi}$ and the target noise value $L_{pi}$ is less than the preset difference.

3. The method according to claim 2, wherein a process of performing calculation under the constraint on a total cost for in-vehicle noise reduction and based on the multivariate non-linear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction comprises:

calculating the minimum total cost for in-vehicle noise reduction under the constraint on a total cost for in-vehicle noise reduction, based on an equation expressing the total cost for in-vehicle noise reduction as

$$f=\sum_{i=1}^{M} k_i \Delta TL_i + \sum_{j=1}^{N} k_j \Delta L_w$$

with adjusting values of the increment $\Delta TL_i$ of the sound transmission loss of each of the different regions and the decrement $\Delta L_w$ of the sound power of each of the sound source devices, where $k_i$ represents a cost corresponding to the increment $\Delta TL_i$ of the sound transmission loss, and $k_j$ represents a cost corresponding to the decrement $\Delta L_w$ of the sound power; and
determining the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction.

4. The method according to claim 1, wherein the sound transmission losses of the different regions comprise a sound transmission loss of any one or more of following regions of the vehicle: a floor, a side wall, a roof, an end wall, a passenger compartment side door, a driver's cab door, a window, a windshield,

and a front end of the driver's cab.

**5.** The method according to claim 1, wherein the sound powers of the sound source devices comprise a sound power of any one or more of a wheel and rail, an air conditioner, a traction converter, an auxiliary converter, a traction motor, an air compressor, and a gear box.

**6.** A system for optimizing and designing low in-vehicle noise, comprising:

an establishing unit, configured to acquire sound source distribution characteristics corresponding to different regions of a to-be-designed vehicle and sound source devices respectively, and establish an in-vehicle noise simulation-prediction-analysis model based on the sound source distribution characteristics;
an output unit, configured to perform noise prediction based on the in-vehicle noise simulation-prediction-analysis model iteratively until a predicted noise value $L_{psi}$ satisfying a minimum total cost for in-vehicle noise reduction is outputted and a difference between the predicted noise value $L_{psi}$ and a target noise value $L_{pi}$ is less than a preset difference, wherein the noise prediction is performed by taking a sound transmission loss $TL_i$ of each of the different regions of the to-be-designed vehicle and a sound power $L_{wj}$ of each of the sound source devices as an input to the in-vehicle noise simulation-prediction-analysis model, the noise prediction starts with an input of initial sound transmission losses and initial sound powers and iterates under a constraint on a total cost for in-vehicle noise reduction, and wherein the constraint on a total cost for in-vehicle noise reduction is expressed as

$$\begin{cases} L_{pi} \leq L_{psi} \\ \Delta TL_i \geq 0 \\ \Delta L_w \geq 0 \end{cases},$$

where $L_{pi}$ represents the target noise value, $\Delta TL_i$ represents an increment of the sound transmission loss of each of the different regions of the to-be-designed vehicle, $\Delta L_w$ represents a decrement of the sound power of each of the sound source devices, $i$ ranges from 1 to M, where M represents a total number of the different regions of the to-be-designed vehicle and is a positive integer greater than 1, and $j$ ranges from 1 to N, where N represents a total number of the sound source devices of the to-be-designed vehicle and is a positive integer greater than 1;
an acquiring unit, configured to acquire a design parameter of each of the different regions of the to-be-designed vehicle and a design parameter of each of the sound source devices which are used to obtain the predicted noise value $L_{psi}$; and
a design unit, configured to design a vehicle based on the design parameter of each of the different regions of the to-be-designed vehicle and the design parameter of each of the sound source devices.

**7.** The system according to claim 6, wherein the output unit that performs the noise prediction based on the in-vehicle noise simulation-prediction-analysis model iteratively with starting with the input of the initial sound transmission losses and the initial sound powers and being under the constraint on a total cost for in-vehicle noise reduction comprises:

a first acquiring module configured to acquire initial design parameters of the vehicle, wherein the initial design parameters of the vehicle comprise a design parameter of each of the different regions of the vehicle and a design parameter of each of the sound source devices;
a second acquiring module configured to acquire, based on the design parameter of each of the different regions of the vehicle, the initial sound transmission loss of the region;
a third acquiring module configured to acquire, based on the design parameter of each of the sound source devices, the initial sound power of the sound source device;
a predicting module configured to perform the noise prediction by inputting the initial sound transmission loss of each of the regions and the initial sound power of each of the sound source devices to the in-vehicle noise simulation-prediction-analysis model, to obtain an initial predicted noise value;
a calculating module configured to perform calculation under the constraint on a total cost for in-vehicle noise reduction and based on a multivariate non-linear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction;
a first determining module configured to determine an acoustic requirement indicated by the increment $\Delta TL_i$ of the sound transmission loss of each of the different regions under the minimum total cost for in-vehicle noise reduction and

an acoustic requirement indicated by the decrement $\Delta L_w$ of the sound power of each of the sound source devices under the minimum total cost for in-vehicle noise reduction;

a second determining module configured to determine, based on the acoustic requirements, a design parameter and a new sound transmission loss corresponding to a noise reduction scheme for each of the different regions, and a design parameter and a new sound power of each of the sound source devices; and

an output module configured to perform the noise prediction by inputting the new sound transmission losses and the new sound powers to the in-vehicle noise simulation-prediction-analysis model, until the predicted noise value $L_{psi}$ satisfying the minimum total cost for in-vehicle noise reduction is outputted and the difference between the predicted noise value $L_{psi}$ and the target noise value $L_{pi}$ is less than the preset difference.

**8.** The system according to claim 7, wherein the calculating module comprises:

a calculating sub-module configured to calculate the minimum total cost for in-vehicle noise reduction under the constraint on a total cost for in-vehicle noise reduction, based on an equation expressing the total cost for in-vehicle noise reduction as

$$f=\sum_{i=1}^{M} k_i \Delta TL_i + \sum_{j=1}^{N} k_j \Delta L_w$$

with adjusting values of the increment $\Delta TL_i$ of the sound transmission loss of each of the different regions and the decrement $\Delta L_w$ of the sound power of each of the sound source devices, where $k_i$ represents a cost corresponding to the increment $\Delta TL_i$ of the sound transmission loss, and $k_j$ represents a cost corresponding to the decrement $\Delta L_w$ of the sound power; and

a determining sub-module configured to determine the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction.

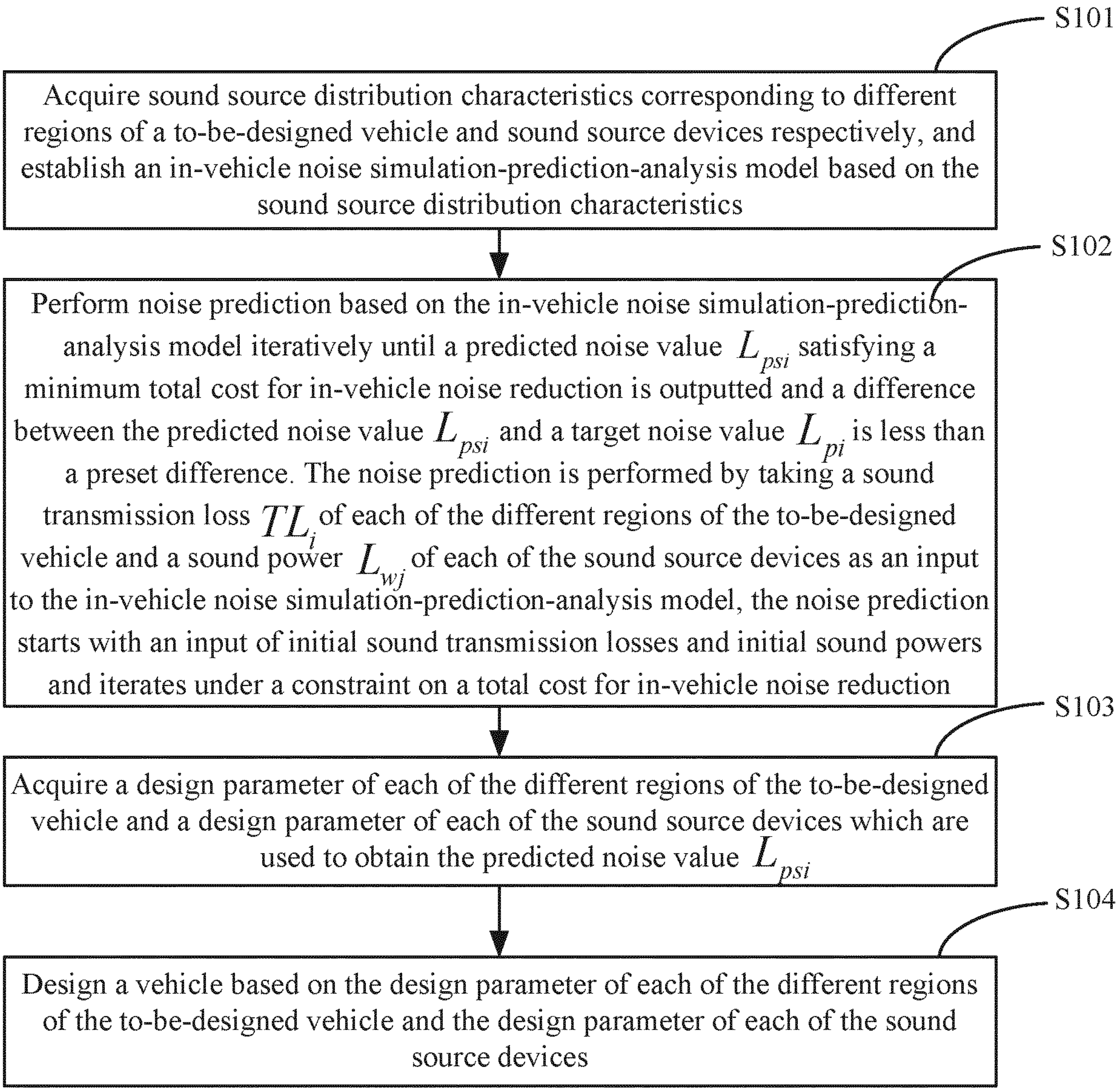
S101
Acquire sound source distribution characteristics corresponding to different regions of a to-be-designed vehicle and sound source devices respectively, and establish an in-vehicle noise simulation-prediction-analysis model based on the sound source distribution characteristics
S102
Perform noise prediction based on the in-vehicle noise simulation-prediction-analysis model iteratively until a predicted noise value $L_{psi}$ satisfying a minimum total cost for in-vehicle noise reduction is outputted and a difference between the predicted noise value $L_{psi}$ and a target noise value $L_{pi}$ is less than a preset difference. The noise prediction is performed by taking a sound transmission loss $TL_i$ of each of the different regions of the to-be-designed vehicle and a sound power $L_{wj}$ of each of the sound source devices as an input to the in-vehicle noise simulation-prediction-analysis model, the noise prediction starts with an input of initial sound transmission losses and initial sound powers and iterates under a constraint on a total cost for in-vehicle noise reduction
S103
Acquire a design parameter of each of the different regions of the to-be-designed vehicle and a design parameter of each of the sound source devices which are used to obtain the predicted noise value $L_{psi}$
S104
Design a vehicle based on the design parameter of each of the different regions of the to-be-designed vehicle and the design parameter of each of the sound source devices

**Figure 1**

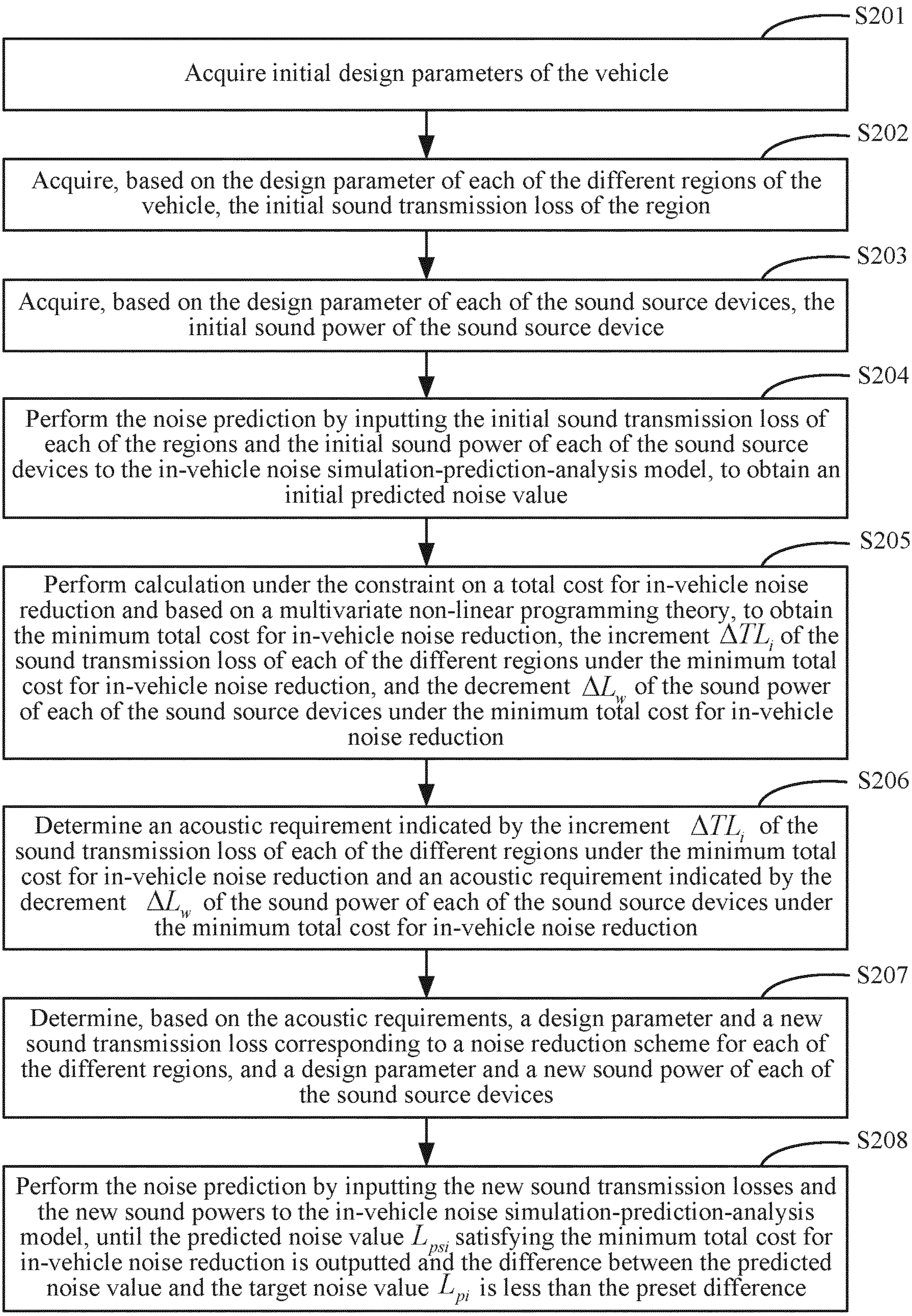
S201
Acquire initial design parameters of the vehicle
S202
Acquire, based on the design parameter of each of the different regions of the vehicle, the initial sound transmission loss of the region
S203
Acquire, based on the design parameter of each of the sound source devices, the initial sound power of the sound source device
S204
Perform the noise prediction by inputting the initial sound transmission loss of each of the regions and the initial sound power of each of the sound source devices to the in-vehicle noise simulation-prediction-analysis model, to obtain an initial predicted noise value
S205
Perform calculation under the constraint on a total cost for in-vehicle noise reduction and based on a multivariate non-linear programming theory, to obtain the minimum total cost for in-vehicle noise reduction, the increment $\Delta TL_i$ of the sound transmission loss of each of the different regions under the minimum total cost for in-vehicle noise reduction, and the decrement $\Delta L_w$ of the sound power of each of the sound source devices under the minimum total cost for in-vehicle noise reduction
S206
Determine an acoustic requirement indicated by the increment $\Delta TL_i$ of the sound transmission loss of each of the different regions under the minimum total cost for in-vehicle noise reduction and an acoustic requirement indicated by the decrement $\Delta L_w$ of the sound power of each of the sound source devices under the minimum total cost for in-vehicle noise reduction
S207
Determine, based on the acoustic requirements, a design parameter and a new sound transmission loss corresponding to a noise reduction scheme for each of the different regions, and a design parameter and a new sound power of each of the sound source devices
S208
Perform the noise prediction by inputting the new sound transmission losses and the new sound powers to the in-vehicle noise simulation-prediction-analysis model, until the predicted noise value $L_{psi}$ satisfying the minimum total cost for in-vehicle noise reduction is outputted and the difference between the predicted noise value and the target noise value $L_{pi}$ is less than the preset difference

**Figure 2**

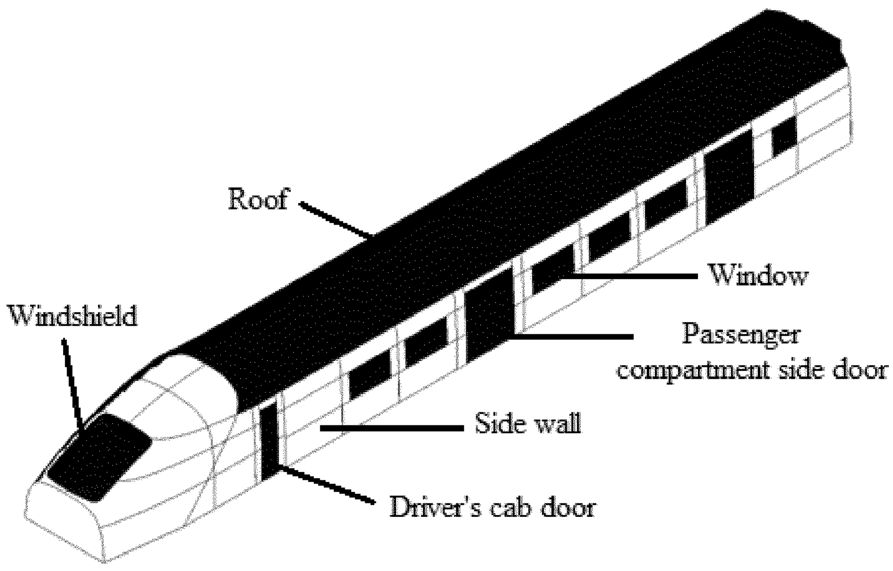


**Figure 3**

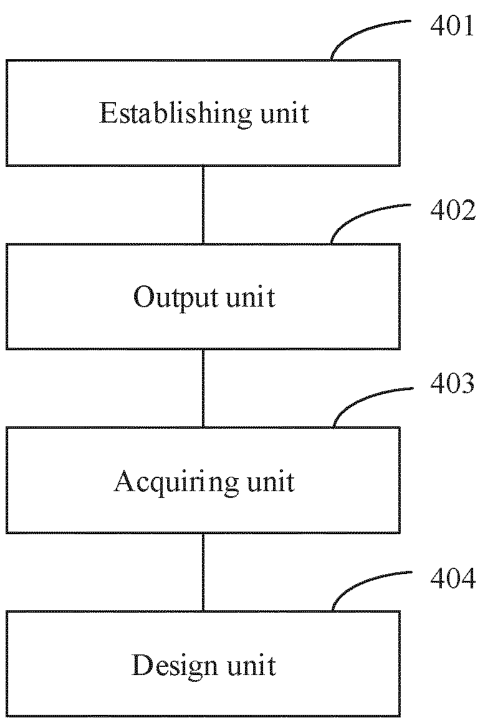


**Figure 4**

**INTERNATIONAL SEARCH REPORT**

International application No.
**PCT/CN2020/118669**

**A. CLASSIFICATION OF SUBJECT MATTER**

G06F 30/15(2020.01)i; G06F 119/10(2020.01)i; G06F 111/04(2020.01)i

According to International Patent Classification (IPC) or to both national classification and IPC

**B. FIELDS SEARCHED**

Minimum documentation searched (classification system followed by classification symbols)

G06F; B61D; G01H

Documentation searched other than minimum documentation to the extent that such documents are included in the fields searched

Electronic data base consulted during the international search (name of data base and, where practicable, search terms used)

CNKI, CNPAT, WPI, EPODOC, 中车长春轨道客车, 王金田, 吴健, 高阳, 低噪声, 噪声, 噪音, 设计, 声功率, 隔声量, 迭代, noise?, yawp, low, sound, source, insulation, power, iterative, design, optimization

**C. DOCUMENTS CONSIDERED TO BE RELEVANT**

| Category* | Citation of document, with indication, where appropriate, of the relevant passages | Relevant to claim No. |
|---|---|---|
| A | CN 107745721 A (CRRC TANGSHAN CO., LTD.) 02 March 2018 (2018-03-02) description, paragraphs 82-144, figures 1-5 | 1-8 |
| A | JP 2020090279 A (HITACHI LTD.) 11 June 2020 (2020-06-11) entire document | 1-8 |
| A | CN 105590003 A (ZHEJIANG UNIVERSITY) 18 May 2016 (2016-05-18) entire document | 1-8 |
| A | CN 107862141 B (SOUTHWEST JIAOTONG UNIVERSITY) 04 August 2020 (2020-08-04) entire document | 1-8 |
| A | KR 20100054381 A (UNIV. HANYANG IUCF-HYU) 25 May 2010 (2010-05-25) entire document | 1-8 |
| A | CN 110502844 A (CRRC ZHUZHOU LOCOMOTIVE CO., LTD.) 26 November 2019 (2019-11-26) entire document | 1-8 |
| A | CN 110875031 A (ZHUZHOU CRRC TIMES ELECTRIC CO., LTD.) 10 March 2020 (2020-03-10) entire document | 1-8 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 June 2021** | **23 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2020/118669**

| Patent document cited in search report | | | Publication date (day/month/year) | Patent family member(s) | | | Publication date (day/month/year) |
|---|---|---|---|---|---|---|---|
| CN | 107745721 | A | 02 March 2018 | CN | 107745721 | B | 27 August 2019 |
| JP | 2020090279 | A | 11 June 2020 | EP | 3663943 | A1 | 10 June 2020 |
| CN | 105590003 | A | 18 May 2016 | | None | | |
| CN | 107862141 | B | 04 August 2020 | CN | 107862141 | A | 30 March 2018 |
| KR | 20100054381 | A | 25 May 2010 | KR | 101025163 | B1 | 31 March 2011 |
| CN | 110502844 | A | 26 November 2019 | | None | | |
| CN | 110875031 | A | 10 March 2020 | | None | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202011028783